# EUROPEAN PATENT APPLICATION

(11) **EP 4 455 412 A1**
(43) Date of publication of application: **30.10.2024**
(21) Application number: 24170971.6
(22) Date of filing: 18.04.2024
(51) Int. Cl.: E02F 9/20, E02F 9/26

(54) **CONTEXT-SENSITIVE CONTROL SYSTEM FOR A REMOTE CONTROLLED WORKING MACHINE**

(30) Priority: 18.04.2023 SE 2350465
(71) Applicant: Brokk Aktiebolag, 931 27 Skelleftea (SE)
(72) Inventor: NYSTRÖM, Andreas, 934 93 Kusmark (SE)
(74) Representative: Zacco Sweden AB

(57) **Abstract**

The invention relates to a context-sensitive control system, comprising a work machine (1) controllable by remote control, a remote control unit (3) with an operator interface (22) which enables an operator (2) walking next to the work machine to control the work machine via operator commands, a projection means (50) enabling projection of information for the operator; a communicator (130) configured to receive context-sensitive information in response to signal data from transducers and sensors (S1-Sn) of the work machine and to communicate said information to the projection means (50) configured to project context-sensitive information (150) onto a projection surface (52) in such a way that the information becomes visually visible to the operator (2).

## Description

### Technical area

The present invention relates to a context-sensitive control system for a remotely controlled work machine which is controlled and controlled by means of a remote control unit by an operator who walks next to the machine according to the preamble to patent claim 1. The invention also relates to a remotely controlled demolition robot according to patent claim 12. The invention also relates to a method for steering and control of a remotely controlled working machine according to patent claim 13 and use of a remote control unit according to patent claim 15.

### Background

One remote-controlled on tracks or wheels drivable work machine, for example in the form of an electrically driven demolition robot or similar remote-controlled manipulator vehicle equipped with a tool-carrying movable arm system, is remotely controlled wirelessly by means of a remote control unit by an operator who walks next to the work machine. The movements of the work machine are controlled and controlled through the operator's influence of a user interface on the remote control which includes levers and controls on the remote control unit which, via commands, control various hydraulically active functions of the work machine. Essentially, today the operator receives all of his operator support information via the user interface on the remote control.

The operator is exposed to a large amount of information, external disturbances and stimuli while the operator directs and controls the work of the work machine. Part of this stimulus relates to the multitude of pilot lights, gauges and similar indicators that the remote control unit's operator interface contains and that the operator must keep an eye on while the operator must control and monitor the movements of the work machine. By the operator moving around the work machine while performing a number of different tasks under the supervision of the operator, for example the demolition and demolition work with a jackhammer, the relative position of the operator in relation to the work machine will vary.

There is thus a need to provide control systems for remotely controlled work machines that can offer an operator walking next to the work machine improved opportunities to focus on the work task, minimize distractions and ensure the operator's ability to assimilate and use in an operator interface presented information from the control system. There is also a need to redirect a distracted operator's attention from non-critical activities to such tasks as are necessary to maintain safe and efficient operation of the work machine. There is also a need to provide feedback to the operator related to the performance of the work machine and to provide additional feedback that can help the operator improve his own and thus the work machine's performance.

Modern information technology has provided us with the opportunity to collect data (diagnostic data) from the electronic control units and data networks that are part of a control system for work machines, for example data when diagnosing errors that occur or in case of machine damage and regarding how and when a work machine is run. For this purpose, modern control systems include a number of transducers, gyros, angle transducers and sensors with which a variety of values and parameters of the work machine can be sensed. In the computer-based control units that are part of modern control systems, cumulative changes that depend on current measurement values and that are deemed to affect the operational operation of the same can be stored in memory and, after computer processing, presented to the operator in a user interface. With cumulative effects refers to the resulting effect that occurs when several different effects interact with each other and which can, for example, include both state and control data. The information technology can thus be used to support the operator by continuously giving the operator feedback regarding the current machine status via a human-machine interface (HMI). Since a number of different ways of collecting computer processing and presenting operational work machine operation data and operator activity data at work machines on a monitor or similar operator interface have long been known, they will not be described in more detail.

Modern mobile radio technology has also made it possible, with the help of LORAN (Location Radio Based Navigation), triangulation and other similar positioning systems, to locate, orient and identify objects in fictitious spaces delimited by spontaneous radio-based networks. Depending on whether the object located in the room is an approved object or not, the object can be given access to contextual information as long as the object is in the room or depending on positionally where the object is geographically in the room. For approval, the object such as an operator or the like must be identifiable, which means that the object must be associated with some type of radio-based location sensor.

Associated with a location sensor operating at short-range radio frequencies, such as an RFID tag or an ID transponder, an object forms a so-called "node", which can be tracked in a short-range radio-based system. A transmitter/receiver operating on short-range radio frequencies that has been suitably deployed can form a base station (BS) for a spontaneous wireless personal computer network. With the help of one or more antennas, i.e., transmitters/receivers that act as localizers, the location sensor that is in the network within a service region can be identified and geographically located. Spontaneous network or ad-hoc network refers to a temporary wireless network, consisting of nodes that are within range of each other. The term "short range radio system" will be used hereinafter to denote what is known as a "wireless personal area network" (abbreviated "WPAN") according to IEEE 802.11 or similar standard. The term "service region" is used to denote a landscape or a region whose areal extent is predetermined, that is, in practice, a cell area or defined geographical zones that can be limited between several cooperating transmitters/receivers and that has the ability to forward (link) radio communications between each other. To enable external communication with the personal network, a so-called master (base station) can be dedicated among one of the antennas (transmitters/receivers) that are components of a system to allow connection of the spontaneous wireless network to a fixed network, for example over Ethernet.

For estimating the geographic position of a location sensor in a spontaneous network, methods can be used that measure the time differences (TD) that occur between a location sensor that has been associated with an object. Other variants may use Doppler effect for positioning of unknown objects with the absence of associated location sensor in a spontaneous network through the disturbances and differences in frequencies and wavelengths that occur in the network due to the movements of the object within the network.

Upon request from an antenna, the position of the location sensor within a defined cell area can be determined with high accuracy. The estimation of position and the localization of a position sensor is normally based on the radio conditions between the majority of at least three cooperating antennas, the exact geographic position of each antenna being known. Geographical position and direction can be determined by triangulation by measuring distances and angles to an object in the network. In trilateration, the relative or absolute difference in the time it takes for a signal from a location sensor, in response to a request, to propagate from the location sensor to finally reach each transmitter/receiver is measured. An advantage of trilateration over triangulation is that a clear line of sight is not necessary. The "time-of-arrival difference" (abbreviated "TdoA") is calculated from the propagation time of the signals in the relevant medium. Radio waves propagate at a known speed through a wireless medium. During trilateration, the signal strength or time information from several access points can be used in combination to form a coverage circle and sharing points, whereby the distance from at least three different positions can be calculated. Since mobile cellular networks and similar telecommunications systems that allow position determination have long been well known, the technology will not be described in more detail.

Furthermore, it has long been known to provide various informationally supportive human-machine interfaces by projecting various types of operator-supportive information. The term "*project or projecting*" means showing enlargements of images by a lens projecting an illuminated image onto a projection surface or matrix. The term "*lens*" implicit in a projector means an optical lens or assembly of lenses used to create an image of an object. The term "*projector*" refers to a device used to display enlarged images by a lens projecting an illuminated image onto a projection surface, matrix, film screen or the like. Usually, various types of supporting character information, image information, etc. retrieved from a database are projected in this way. Common in technology are DLP projectors (Digital Light Processing) or liquid crystal projectors. With the help of the technology, images and similar information can be projected on flat screens, curved surfaces as well as on an arbitrarily chosen projection surface of various objects, also on double-curved or similar non-flat surfaces. It is also well known to project information in the form of images and/or text on various types of craft, especially aircraft, and to arrange intermediate reflectors or mirrors in addition, in order to cause the information to be displayed in the desired location through reflection. A major advantage here is that information can only be displayed when it is deemed necessary by the context to support the operator, alternatively information can be called up manually by the operator, for example, via an operator interface on the remote control unit. Assessment can be done by comparing the information with reference data stored in the database.

There is thus a need to provide information for the operator walking next to the work machine that can help the operator improve his performance in sync with the work task. A general goal in the design of human-machine interfaces is user convenience, which means that presented operator-supporting information must be easy to follow without the operator needing to take his eyes off the work machine. In other words, it is desirable that the operator can minimize switching between remote vision for machine monitoring and close vision on the remote control unit interface as much as possible. In other words, it is desirable to have a display system for operator information that allows as accommodation-free reading as possible for an eye tuned to distance vision. The information presented must also be contextual, i.e. representative of the context, circumstance, situation or environment in which the operator and/or the work machine is currently located. Context in this context means not only the geographical position of the operator (object) but also the operator's preferences, the activity and work task that the operator carries out with the work machine in every situation and context. The information must be adapted to the operator's current context and surrounding environment. If the operator/work machine changes context, the service must adapt and be adaptive to the new situation.

A first aim of the present invention is thus to provide a control system for a remotely controlled work machine which is controlled and controlled by means of a remote control unit by an operator walking next to the machine and which in a feedback manner makes it possible to present operator supporting contextual information that is visually within the field of vision of the operator in the direction of the work machine and where this information can contribute to increasing the performance of the operator and thus also of the work machine.

A second purpose of the invention is to make the information visually visible within the operator's field of vision to an even greater degree guided by the operator's relative geographical position in relation to the work machine.

A third aim of the invention is to provide a control system whereby operator supporting information can be illustrated in a simple visual and dynamic way for the operator without significantly disturbing the operator while working with the work machine.

A fourth object of the invention is to provide a remote-controlled work machine, especially in the form of a remote-controlled demolition robot that offers contextual presentation of operator supporting information visually visible within the field of vision of the operator in the direction of the work machine.

The first object of the invention is solved by a context-sensitive control system for a remote-controlled work machine that exhibits the features and characteristics specified in patent claim 1. The second object of the invention is solved by a work machine, in particular a remote-controlled electrically powered demolition robot that exhibits the features and characteristics specified in claim 12. The third and fourth objects of the invention are achieved by a method of controlling and controlling a remotely controlled working machine as set forth in claim 13. The invention also relates to a method of using a remote control unit with an integrated position sensor according to claim 15. Additional advantages and features of the invention appears from the subclaims.

The insight that is the basis of the invention is that improved opportunities to focus on the work task can be obtained by visually projecting to the operator, as the remote-controlled work machine walks next to it, operator-supporting context-sensitive information that is visually visible within the field of vision of the operator in the direction of the work machine and/or its work area. The contextual context can include parameters that are associated with the operator's position in relation to the work machine in order to thereby achieve a more improved visual visibility of the information. The contextual information includes parameters relating to operating data, including signal data from transducers and sensors of the work machine. Thanks to the fact that the information is projected on or in close proximity to the work machine, a number of advantages are achieved, not least that the operator can focus on the work machine's operational work while the person concerned can obtain information that depends on the current context. The operator thus never needs to take his eyes off the work machine during the operative work. In an alternative embodiment of the invention, a difference feedback function is used which is configured to generate cumulative measurement data based on received signal data from transducers and sensors of the work machine, which cumulative measurement data can be presented to the operator in an operator-supporting manner together with other associated context-sensitive information.

Position determination of the operator in relation to the work machine takes place by means of generally available technology that allows relative positioning such as LORAN (Location Radio Based Navigation), triangulation and or other similar systems for position determination, and generally available technology is used that allows the projection of operator support information for the operator such as may be based on DLP technology (Digital Light Processing) in combination with DMD technology (Digital Micromirror Device) or similar.

According to one embodiment of the invention, a location sensor is integrated in the remote control unit in order to be associated with the object in an electromagnetic radio field around the work machine.

### Brief description of the drawings

In the following, an embodiment of the invention is described with reference to the attached drawings, on which;
Fig.1 shows a perspective view of a remote-controlled work machine in the form of a demolition robot equipped with a context-sensitive control system according to the invention.
Fig. 2 schematically shows a plan view of the remotely controlled work machine in Fig. 1 with an electromagnetic service area indicated for the work machine defined by an antenna unit.
Fig. 3 schematically shows the architecture of a context-sensitive control system according to the invention.
Fig. 4 shows a block diagram of a location sensor or a node that is identifiable in the electromagnetic field of the antenna unit and which location sensor is associated with an object.
Fig. 5 shows a block diagram for an antenna (base unit) with transmitter/receiver that works with short-range radio frequency and which, together with at least another pair of similar antennas, is included in an antenna unit for a remote-controlled work machine according to the invention.
Fig. 6 shows a block diagram for the principle function of a communicator that is part of a control system of a work machine according to the invention and with which also cumulative changes and trends that depend on current sensor and sensor measurement values and that are deemed to affect the operational operation of the work machine can be stored in memory and presented after computer processing in a user interface as context-sensitive information.
Fig. 7 schematically shows a first example of presentation of context-sensitive information, whereby information about the object's (operator's) position and direction towards the work machine is used to effectively illustrate the information.
Fig. 8 schematically shows a second example of presentation of context-sensitive information, whereby information about the object's (operator's) position and direction in relation to the work machine is used to effectively illustrate the information.

### Detailed description

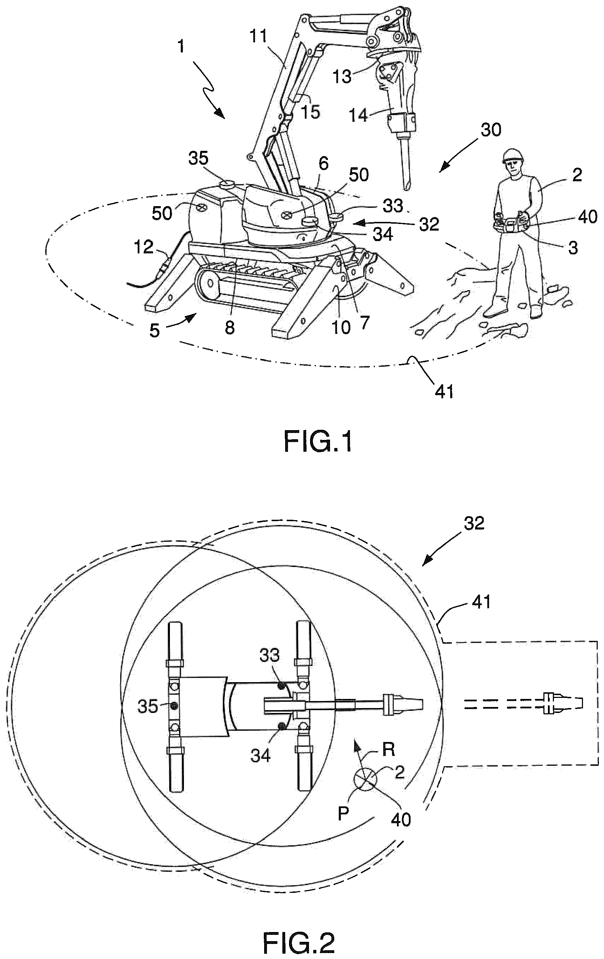

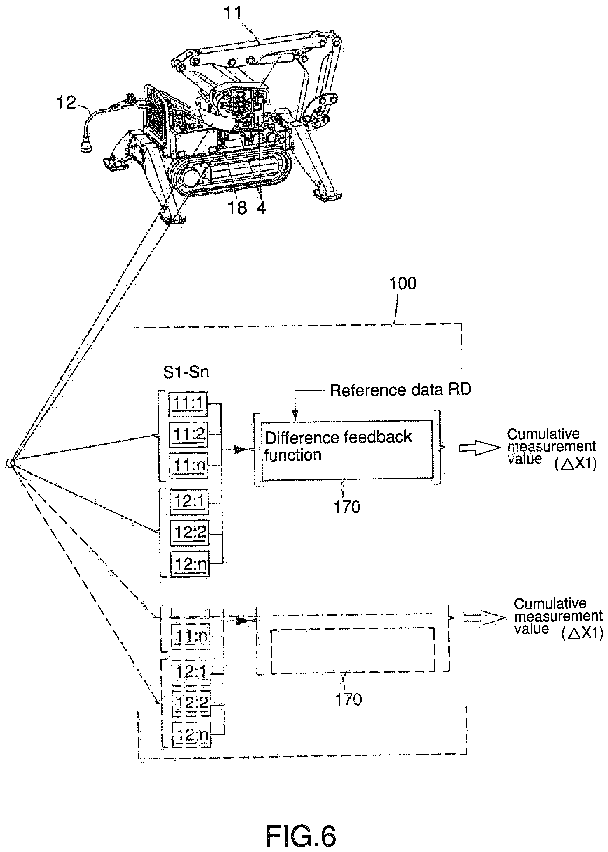

Fig. 1 shows a remote-controlled work machine 1 in the form of a demolition robot, hereinafter referred to as work machine. An operator 2 walks next to the work machine and remotely controls it wirelessly by means of a portable remote control unit 3 which is connected via radio signals to a control unit 4 included in the work machine (see fig. 6). 5 generally denotes a chassis with a carriage having an upper carriage 6 and an undercarriage 7. The upper carriage 6 is rotatably mounted on the undercarriage 7 for pivoting the upper carriage in a horizontal plane. The undercarriage 7 is provided with a propulsion device 8 which includes right and left caterpillar tracks. 10 denotes support legs that are operated by associated hydraulic cylinders and 11 denotes a maneuverable arm system which, consisting of a number of successively articulated arm parts, is supported on the upper carriage 6 and maneuverable by means of a number of adjustment and operation devices in the form of hydraulic cylinders 15 operating between the arm parts. 12 denotes a cable intended to is connected to a stationary electrical line network to supply the demolition robot 1 with electrical power. The arm system 11 is provided at its free end with a tool holder 13 in which different types of tools 14 can be releasably attached and, where applicable, also connected for hydraulic operation.

As can best be seen from the work machine 1 in the partially stripped version in Fig. 6, a drive system included in the work machine includes an electric motor that drives a hydraulic pump that controls hydraulic flow to consumers via valve blocks (not shown). The functions of the work machine 1 are controlled by one or more computer-based control units included in the control unit 4 with memory modules for storing data and instructions which, when executed by the processor, control various functions of the work machine 1. 18 denotes a radio module which communicates with a remote control unit 3 to receive commands to be executed by the controller 4.

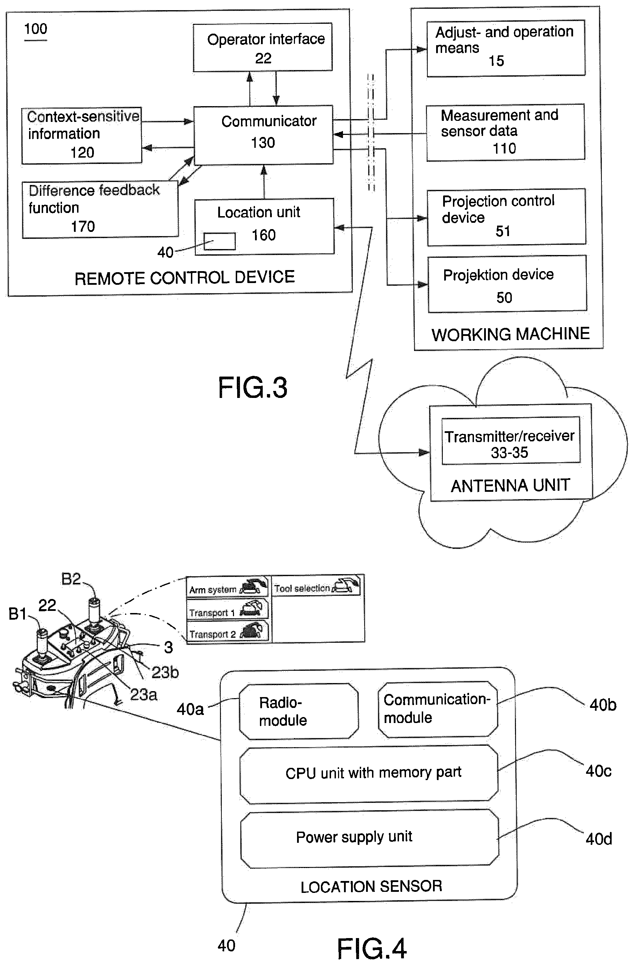

In Fig. 4, the remote control unit 3 that is part of the work machine 1 is shown in more detail. The remote control unit 3 comprises a human-machine interface (HMI) 22. The interface also includes the controls B1, B2 which include a pair of joysticks (joysticks), a left joystick B1 and a right joystick B2 which, when actuated, are interpreted by the controller 4 and get the working machine 1 to work in accordance with the operator's 2 commands. A primary operating mode selector switch 23a is connected to the control unit 4 and is used to select one of several different alternative operating modes in the control unit 4 for the work machine 1 whereby, as illustrated with graphic symbols in the detail enlargement in Fig. 4, each respective selected operating mode determines which control input corresponds to a current operator command with regard to the function of the joysticks B1, B2.

Referring again to Fig. 1, there is generally shown an exemplary implementation of a context sensitive control system according to the present invention. A locating device 30 comprises an antenna unit 32 with a first antenna 33, a second antenna 34 and a third antenna 35 which are spatially separated from each other and placed at predetermined geometric relative positions on the work machine for generating a plurality of electromagnetic fields 36, 37 , 38. The first 33 and the second antenna 34 are located at the front of the work machine 1 rotatable superstructure 6 which supports the arm system 11 while the third antenna 35 is located at the rear of the substructure 7. A location sensor 40 which at the same time constitutes an identification element which is identifiable in the antenna unit 32 electromagnetic field is associated with the first object 2. In the embodiment of the invention described here, the location sensor 40 is integrated in the remote control unit 3 in order to be associated with the object 2 (the operator) in this way, also compare Fig. 4. With the help of the identifier of the identification element, it is determined if operator 2 is authorized and thus approved for communication with the context-sensitive control system.

As illustrated in Fig. 2, the antenna unit 32 monitors a service area 41 around the work machine 1, shown here with a dot-dashed contour line. The three antennas 33, 34, 35 span a number of spherical radio fields which is schematically illustrated by the different circles in Fig. 2. In this embodiment, the service area 41 is delimited by a sub-area of the different radio fields where they overlap. The service area 41 has a projecting section extending in the direction of the movable arm system 11 and two side sections and a rear section. Due to the fact that the first 33 and the second antenna 34 are located on the rotatable superstructure 6 of the working machine which supports the arm system 11, the radio fields from these two antennas will accompany the arm system 11 during the rotation of the superstructure 6 on the substructure 7. As mentioned above, the object 2 is associated with the location sensor 40 via the remote control unit 3 and as long as the remote control unit 3 is within radio range of all three antennas, a location parameter in the form of geometric position P and direction R towards the antenna unit 32 and thus the work machine 1 can be detected for the object 2 within the service area 41.

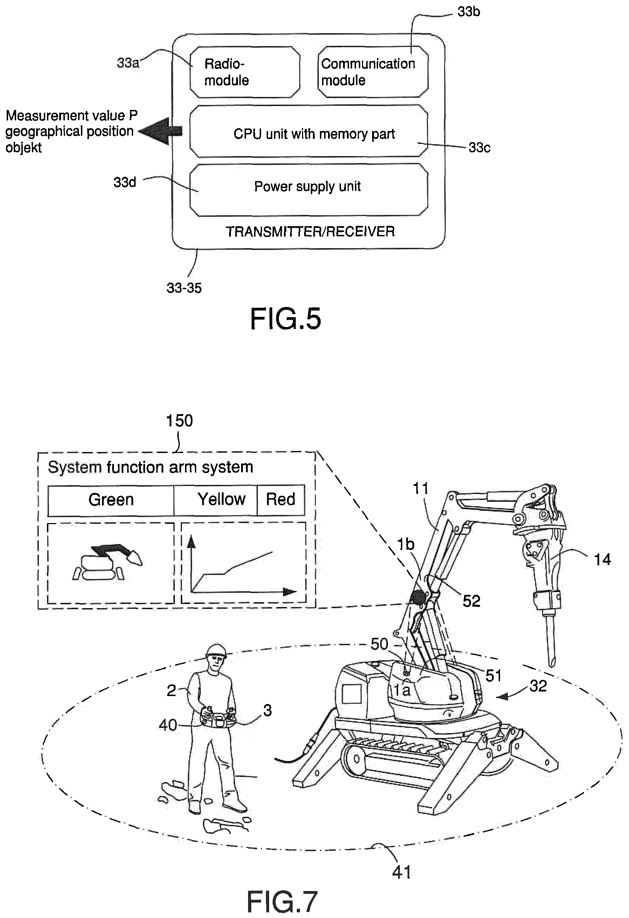

As shown in Fig. 5, each location sensor 40 may include a radio module 40a, a communication module 40b, a CPU unit with a memory part 40c and a power supply unit 40d. The location sensor's communication module 40b can allow sharing in terms of operating and control data with the remote control unit's 3 operating electronics.

As shown in Fig. 6, each antenna 33-35 (transmitter/receiver) may include a radio module 33a, a communication module 33b, a CPU unit with a memory part 33c and a power supply unit 33d. The antenna's communication module 33b, at least as far as the antenna dedicated to functioning as a base is concerned, is configured via an input and output interface 33e for sharing operating and control data with the corresponding input-output interface of the control unit 4's operating electronics with memory modules and database.

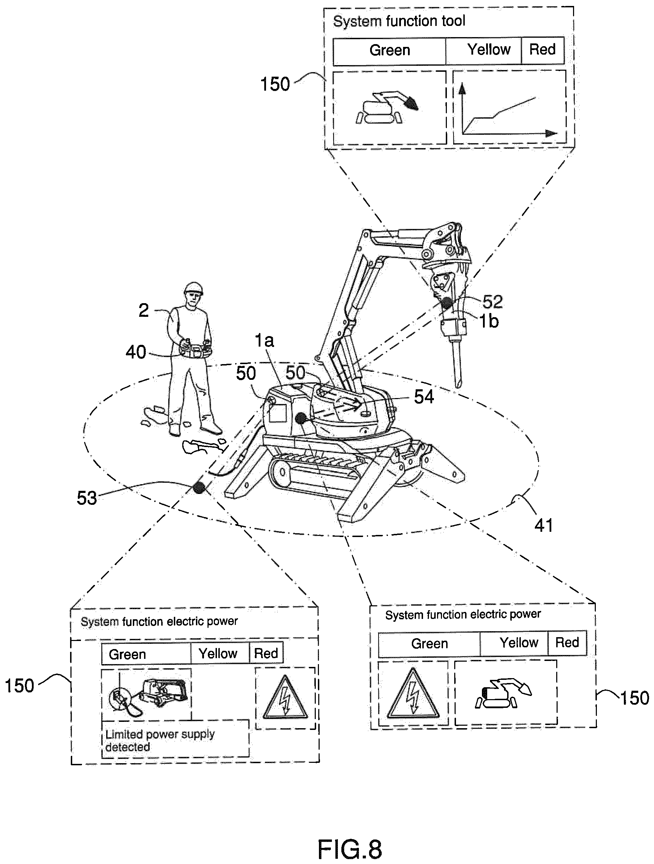

On the working machine 1, an LED projection device comprising one or several LED projection means 50 can advantageously be arranged. As shown in figures 7 and 8, each such projection means 50 can be integrated into a first surface part 51 of a first working machine part 1a which is part of the working machine and be configured to visually illustrate contextual information from the communicator 130 by projection on a facing second surface portion 52 of a second work machine part 1b that includes the work machine, or on a portion 53 of a ground surface surrounding the work machine and within the service zone. Any such LED projection device may comprise projection means of the type that exhibit arrays of very small light-emitting diodes (m-LEDs, light-emitting diodes). With DLP (Digital Light Processing) technology with which the light can be projected onto selectable projection surface via DMD ("Digital Micromirror Device"), (micro LEDs), comprehensive chip on which up to 2.2 million microscopically smaller, right-angled arrays are arranged equally mirrors. These mirrors form a kind of projection control means with which the projection can be moved with the help of a small electrode under each mirror. Each mirror is mounted on a hinge and can thus be turned towards or away from the light source. As shown in Fig. 8, the projection device 50 can thus indirectly, via an intermediate reflector or a reflective surface, project the context-sensitive information 150 onto a desired projection surface 52.

To generate coloured image representations, the mirror array is processed sequentially with the three primary colours R, G and B (red, green, blue) illuminated and the resulting images superimposed on the projection object. Other types than the projection means described above are of course also conceivable for use within the scope of the invention.

As shown in the block diagram in Fig. 3, the inventive control system comprises a computer-based remote control device 100 a number of different information sources which essentially consist of measurement and sensor data 110 from the work machine 1, geometric object data from the antenna unit 32 and a database with context-sensitive information 120. Between a control system input communicator 130 and the database of context-sensitive information 120 use bidirectional communication paths. In accordance with the invention, the communicator 130 provides context-sensitive information to the projection control device 51 included in the remote control system 100 and the associated projection device 50 for presenting the information selected in a context to the operator. A location sensor 160 included in the control system is used to establish a geographical context or context based on information about the relative positions and orientation of both the operator 2 and the work machine 1 within the service area 41 of the antenna unit 32.

With reference also to Fig. 7, the remote control device 100 further comprises a difference feedback function 170 which via bidirectional communication paths is in connection with the communicator 130. The difference feedback function 170 has the task of receiving from the communicator 130 information from the various sources such as measurement and sensor data from the work machine 1 and by computer processing of these generate cumulative measured values ΔX which are addressed back to the communicator 130. By cumulative measured values ΔX is meant the type of trend-based changes that can be expected to occur when a number of different events interact with each other. Thanks to the generation of cumulative measurement data ΔX1-ΔXn of received signal data from transducers and sensors S1-Sn of the working machine and on the basis of this cumulative measurement data, the nature of the context-sensitive information 150 projected by the projection means 50 varies to create an informative illustration of a prevailing context for the operator 2 which in a dynamically feed backed manner can improve operator 2 performance.

An example of such a cumulative effect is if the arm system 11 is moved into a less well-chosen or directly unfavourable geometric position by the operator 2 at the same time that the operator, through lever action, commands such a high speed (power) on the arm system 11's actuators and actuators that damage to the arm system risk of occurring. Through appropriate feedback, the control system can momentarily make the operator aware of the current context and circumstances that risk damaging the work machine 1 through the appropriate presentation of information to the operator 2 at the location the operator is in relation to the work machine via the projection means 50.

In one embodiment of the invention, it is possible to illustrate the information even more effectively by not only using the projection control means 51 to select the appropriate projection means 50 to project the information so that it becomes visually visible to the operator, but by means of the projection control means 51 to actively direct the projection onto a surface of the work machine which forms part of a context for the information. Compare Fig. 7, which illustrates how projection of context-sensitive information 150 can be directed towards the arm system 11, for example.

In an embodiment of the invention, the projection device 50 is configured to project context-sensitive information 150 on a projection surface in such a way that the information becomes visually visible to the operator 2, whereby the display of contextual information only occurs when the communicator 130 of the context judges that the information is needed to support the operator 2 In another embodiment, the display of contextual information 150 can be called up manually by the operator 2, for example via an influenceable body 23b which is part of the operator interface 22 of the remote control unit 3.

A location unit 160 included in the remote control unit 3 is in bidirectional connection with the antenna unit 32 and which location unit is implemented to define said service area 41 for the work machine 1. In the location unit 160, the location sensor 40 is also integrated. The location unit 160 in the remote control unit 3 informs the communicator 130 in the remote control unit 3 where the location sensor 40 is located geographically within the service area 41. Information about the location parameter P, R in the form of the location sensor 40 and as a consequence the direction of the remote control unit 3 and the operator 2 towards the antenna unit 32 and thus towards the working machine 1 can be obtained thereby. These different location parameters are used according to the invention to establish a context within which the remote control device 100 is operated.

As an example of a different context, it should be understood that the remote control device 100 can be expected to be used in substantially different contexts when, in the user interface 22, the operating mode selector switch 23a on the remote control unit 3 is switched to the operating mode for "transport" and control of the work machine 1 propulsion means (track) by means of the control levers B1, B2 than if the selected operating mode refers to "Arm system" and the operator's influence of the control levers B1, B2 directs and controls the 11 movements of the arm system.

In the example shown in Fig. 7, a context-sensitive control system is used in accordance with the invention, whereby control devices are used in the form of a remote control unit 3 which is carried by the operator 2 and thus associated with, via the integrated location sensor 40, a work machine 1 with measurement and sensor data . where it is in relation to the work machine 1 (antenna unit 32) and how it is directed towards it 1. Knowing that the operator is within the service area, the communicator 130 in the remote control device 100 asks each of the different sources of information, i.e. measurement and sensor data 110 and communicates information to the difference feedback function 170 which responds by addressing cumulative measurement values ΔX1-ΔXn back to the communicator 130 whereby additional context-sensitive information is obtained from the database 120 to form a prevailing context-sensitive information message to the operator.

In this example, the source of information sensor and sensor data 110 can communicate that the tool 14 which is attached to the tool holder is unsuitable or, considering its own weight, too heavy for the work machine to carry. In more detail, this is done by the communicator 130 passing on generated cumulative measurement values ΔX which are based on said measurement and sensor data together with supplementary context-sensitive information from the database 120 to the projection controller 51, in a form which is partly suitable to project for the operator 2, partly visually visible to the operator with respect to the operator's position in relation to the work machine 1. If the communicator 130 judges that the arm system 11 is critical in terms of the weight of the tool 14, then the communicator 130 can choose to via the projection control means 51 and the projection means 50 visually present the context-sensitive information to the operator on the in the context, the associated arm system 11 shown in Fig. 7, alternatively on the tool 14 or any other projection surface that the communicator 130, guided by information from the context-sensitive information database 120, deems appropriate by the context. From the context, it is also essential that the communicator 130 chooses to project the context-sensitive information so that it becomes visually visible to the operator with regard to where the operator 2 is located geographically in relation to the work machine 1.

The context for a control device according to the invention can also be based on other parameters.

As an example, the context can, as mentioned here at the outset, be that a critical and for the operator dangerous operation can be if the work machine 1 on its propulsion means 8 needs to be moved between different positions. If the work machine 1 is on an inclined surface or in otherwise bad terrain where the work machine 1 is difficult to maneuver, there is a risk that the work machine will tip over due to a dangerous shift in the center of gravity and that the operator will be injured if the person in question is too close to the work machine. A less experienced operator 2 often finds it difficult to foresee the risks of such elements early on and to take appropriate measures to prevent an accident. If the work machine 1 is equipped with a gyro, data from transducers and sensors S1-Sn 110, as well as data from the antenna unit 32 that monitors the service area 41 around the work machine will be collected by the communicator 130. Both data from the gyro and data relating to the position sensors that detect it relative position between the various articulated arm parts that are part of the arm system 11 and thus the geometric position of the arm system as a whole, the angular position of the arm system 11 in the horizontal plane in relation to the work machine 1 and the external length of the arm system 11 from the work machine will be transferred to and processed by the difference feedback function 170. Starting from the cumulative measurement data ΔX1-ΔXn which is communicated back to the communicator 130, context-sensitive information 150 can be projected onto a projection surface that is so chosen that it becomes visually visible to the operator 2 with respect to the relevant geometric position in relation to the work machine 1. The information thus contains suggestions for suitable measures for to minimize the risk of accident. For example, the projection means 50 could project context-sensitive information 150 that warns of the center of gravity shift of the working machine, on a ground surface around the working machine marking with an illuminated circular arc a boundary area for the operator to the working machine 1, due to the angle of inclination and/or the position of the arm system, angular position or the like in a further row cumulatively compiled measurement values ΔX in the context. Compare Fig. 8 which illustrates how information to the operator is projected onto a ground surface visually visible to the operator.

In the example shown in Fig. 8, a context-sensitive control system is used in accordance with the invention whereby a remote control device 100 is used which is arranged in a remote control unit 3 and carried by the operator 2 and thus associated with via the integrated location sensor 40, a work machine 1 with measurements and sensor data, as well as an antenna unit 32 that monitors a service area 41 around the work machine 1. When the operator 2 walks next to the work machine within the service area 41, the location unit 160 detects the remote control unit's and thus also its own geographic position in relation to the work machine 1 within the service area 41. The location unit 160 notifies the communicator 1 30 in the remote control device 100, where it is geographically located in relation to the work machine 1 and how it is directed towards the same 1. By knowing that the operator is within the service area 41, the communicator 130 requests the remote control device 100 for data from the information sources; transducer and sensor data 110, the difference feedback function 170, and the user interface (HMI) 22 about control information associated with or contextually related to prevailing conditions.

In this example, for example, the information sources measurement and sensor data 110 can, by means of suitable electric current meters and based on the cumulative measurement data ΔX1-ΔXn communicated back to the communicator 130, announce that there is a power deficit in the electrical network to which the work machine's power cable 12 is connected . That is, the network cannot deliver the electrical power that the work machine 1 requires. The communicator 130 in the control device can choose to project the context-sensitive information to the operator 2 any surface associated with or contextually related to prevailing conditions.

Fig. 8 shows how the information is projected on a ground surface behind the work machine 1 and on the part of the place where the operator 2 is at the moment and thus in association with the power cable 12 concerned in the context.

## Claims

1. Context sensitive control system, comprising a remote controllable work machine (1), a remote control unit (3) with an operator interface (22) which enables an operator (2) walking next to the work machine to control the work machine via operator commands, a projection means (50) which enables projection of images of information for the operator; a communicator (130) configured to receive context-sensitive information (150) in response to signal data from transducers and sensors (S1-Sn) of the work machine and to communicate said information to the projection means (50) configured to project the context-sensitive information ( 150) on a projection surface (52) in such a way that the information becomes visually visible to the operator (2),
preferably the display of the context-sensitive information (150) takes place only when the communicator (130) of the context or prevailing context judges that the information is needed to support the operator (2).

2. Control system according to claim 1, wherein the display of the context-sensitive information (150) on the projection surface (52) can be called up manually by the operator (2) via the operator interface (22), for example via a body (23b) that can be influenced by the operator which is part of the remote control unit (3).

3. Control system according to any of the claims 1 - 2, wherein the projection means (50) is integrally mounted in a first working machine part (1a) and arranged to project the context-sensitive information (150) on one of the following projection surfaces (52); a projection surface (52) which is integrated into a second work machine part (1b), a projection surface (52) which is constituted by a part of a ground surface (53) surrounding the work machine (1).

4. Context-sensitive control system according to any of the claims 1 - 3, whereby the projection device (50) is arranged to indirectly project the context-sensitive information (150) on a projection surface (52) of the kind specified in claim 3 via an intermediate reflector (54) or a reflective surface.

5. Control system according to any of the claims 1 - 4, wherein the communicator (130) is further configured to receive a location parameter (P, R) associated with the operator (2) in relation to the work machine (1) and which location parameter is communicated to the projection means (50) which is configured projecting on said projection surface (52) the context-sensitive information (150) in such a way that it is visually visible to the operator with respect to the operator's (2) associated location parameter (P, R) relative to the work machine (1), preferably the location parameter (P, R) is associated with the operator (2) via a location sensor (40) arranged in the remote control unit (3).

6. Control system according to claim 5, wherein the location parameter (P, R) is communicated from the remote control unit (3) to the communicator (130).

7. Control system according to any of the claims 5 - 6, wherein the location parameter (P, R) comprises both a location (P) and a direction (R) with respect to the orientation of the remote control unit (3) towards the working machine (1).

8. Control system according to any of the claims 5 - 7, wherein the location sensor (40) comprises an identifier with which the communicator (130) can determine whether the remote control unit (3) and thus the operator (2) is authorized and thus approved for communication with the control system.

9. Control system according to any one of the claims 1 - 8, wherein the communicator (130) comprises a difference feedback function (170) which is configured to generate cumulative measurement data (ΔX1-ΔXn) of received signal data from transducers and sensors (S1-Sn) of the working machine and on the basis of this cumulative measurement data varies the nature of the context-sensitive information (150) projected by the projection means (50) to create an informative illustration of a prevailing context for the operator (2) which can dynamically feedback improve the operator's (2) performance,
preferably the nature of the projected context-sensitive information (150) is varied based on the cumulative measurement data (ΔX1-ΔXn) and the instantaneous state of the work machine in at least one of the following ways that is sensory for the operator; a) varying the projection's colouring through the use of signalling colours such as green, yellow, red; adding to the projection various signalling symbols with some definite meaning or meaning to the operator (2); b) utilization of various graphically represented comparisons in the projection which the cumulative measurement data (ΔX1-ΔXn) appears to the operator (2); c) selected frequencies of a projected pulsating light which, included in the projected information, indicate various states ; d) adding to the projection graphic information that is moving or dynamically varying.

10. Control system according to any of the claims 8 - 9, comprising a database with stored reference data (RD) which is used for generating cumulative measurement data (ΔX1-ΔXn) based on signal data from transducers and sensors (S1-Sn) of the work machine.

11. Control system according to any of the claims 5 - 10, comprising one or a plurality of projection means (50) each of which is integrally mounted in a first working machine part and configured so that with respect to the operator's location parameter (P, R) in relation to the working machine (1) visually display the context-sensitive information in at least one of the following ways; e) graphically projecting the context-sensitive information (150) onto a portion of said second working machine part (1b); f) graphically projecting the context-sensitive information (150) onto a portion of a ground surface (53) around the working machine (1).preferably one or a plurality of the projection means (50) are assigned projection control means (51) with which the projection of context-sensitive information ( 150) can optionally be controlled for projection on a projection surface (52) selected by the communicator (130) ) depending on the prevailing context.

12. Remote-controlled demolition robot, **characterized in that** it comprises a control system according to any of the claims 1-11.

13. Method for controlling and controlling a remote-controlled work machine (1) of the kind where an operator (2) walking next to the work machine directs and controls the movements of the work machine through operator commands on the remote control, including the steps;
I) that context-sensitive information (150) in the form of signal data from measurements and
sensors (S1-Sn) of the working machine (1) are received by a communicator (130) included in the working machine,
II) that the context-sensitive information (150) by means of a on the working machine provided projection means (50) is projected in such a way that the information becomes visually visible to the operator (2),
preferably the method further comprising the step of
III) that the display of the context-sensitive information (150) takes place only when the communicator (130) of the context judges that the information is needed as support for the operator (2) or in the case that display of the context-sensitive information (150) on the projection surface (52) is manually invoked by the operator (2).

14. Method according to claim 13, further comprising the steps;
IV) that the context-sensitive information (150) received by the communicator (130) also comprises a location parameter (P, R) associated with the operator (2) relative to the work machine (1);
V) that the context-sensitive information (150) is projected in such a way on a projection surface (52) on the work machine or from the work machine on a portion of a ground surface (53) surrounding the work machine, that the information is visible to the operator with respect to the operator's (2) associated the location parameter (P, R) in relation to the working machine (1).

15. Using a remote control unit (3) with integrated location sensor (40) at a remotely controlled work machine, of the type where an operator (2) walking next to the work machine directs and controls the same, to project context sensitive information (150) onto a projection surface (52) in a such way that the information becomes visible to the operator (2) with respect to the operator's geometric position (P, R) in relation to the working machine.
